# EUROPEAN PATENT APPLICATION

(11) **EP 3 376 340 A1**
(43) Date of publication of application: **19.09.2018**
(21) Application number: 17160672.6
(22) Date of filing: 13.03.2017
(51) Int. Cl.: G06F 1/26, G06F 13/38

(54) **SERIAL ADVANCED TECHNOLOGY ATTACHMENT CONVERTER**

(71) Applicant: Grandsky Engineering Limited, Central (HK)
(72) Inventor: Ebrahimi, Ahmad, 14167 Berlin (DE)
(74) Representative: Lang, Christian

(57) **Abstract**

A serial advanced technology attachment (SATA) converter is disclosed, comprising a circuit board (2), at least a reading device (3) and a SATA connector (1), wherein the SATA connector includes a housing (10), a tongue portion (11), transmission terminals (12), a power terminal and a ground terminal (14). The housing has one fixing portion (102) respectively disposed at two lateral sides thereof and each transmission terminal is disposed on the tongue portion, the power terminal and the ground terminal are respectively disposed at two lateral sides of the housing and attached to the fixing portions. The present invention enables the SATA connector to transmit electricity and combines the circuit board with at least a reading device to achieve the purpose of conversion, such that data expansion for an external storage can be realized by supporting different types of reading devices.

## Description

### BACKGROUND OF THE INVENTION

### a) Field of the Invention

The present invention relates to a converter, and more particularly to a SATA (Serial Advanced Technology Attachment) converter.

### b) Description of the Prior Art

The general SATA connectors are mainly used for transmitting data, and thus in a SATA connector, the pinout standard for the seven terminal pins are sequentially ground, transmit positive, transmit negative, ground, receive negative, receive positive and ground. This means electricity cannot be transmitted during usage, and if a product requires the provision of electricity, it would be necessary to provide an additional power cord for supplying power. Consequently, the SATA connector can only be used for signal transmission but not for conversion. Moreover, the overall equipment needs to be provided with accessories related to the power cord, leading to a product excessive in size and limited in competitiveness due to increased prices resulted from higher overall production costs.

### SUMMARY OF THE INVENTION

It is a primary object of the present invention to provide a SATA connector with the purpose of electricity transmission, while combining a circuit board with at least a reading device to achieve conversion, and realizing data expansion for an externally corresponding external storage by supporting different types of reading devices, without needing to connect an additional power cord.

To achieve the aforesaid object, a SATA converter is provided in the present invention, comprising: a circuit board electrically connected to at least one reading device; a SATA connector electrically connected to the circuit board and having a housing with a receiving space formed therein and a tongue portion disposed in the receiving space of the housing, two lateral sides of the housing are respectively disposed with a fixing portion; a plurality of transmission terminals, and each of the transmission terminals is disposed on the tongue portion; a power terminal disposed at a lateral side of the housing and attached to the fixing portion; a ground terminal disposed at the other lateral side of the housing and attached to the other fixing portion.

According to an embodiment of the present invention, the power terminal is defined as having a power connecting section, a power welding section extending from an end of the power connecting section, and a power contact section extending from another end of the power connecting section.

According to an embodiment of the present invention, the ground terminal is defined as having a ground connecting section, a ground welding section extending from an end of the ground connecting section, and a ground contact section extending from another end of the ground connecting section.

According to an embodiment of the present invention, the reading device is used to connect an external storage.

According to an embodiment of the present invention, the external storage can be U.2, M.2, NGFF (Next Generation Form Factor), NvMe (Non-Volatile Memory Express), SATA (Serial Advanced Technology Attachment) express, SATA, mSATA (Mini Serial Advanced Technology Attachment), Cfast, CF (Compact Flash Card), SD (Secure Digital Memory Card), Micro SD (Micro Secure Digital Memory Card), Memory stick, a hard disk (HD) and a solid state disk (SSD).

The present invention provides a SATA converter for usage in combination with a SATA docking connector, comprising: a circuit board electrically connected to at least a reading device, a SATA connector electrically connected to the circuit board and having a housing with a receiving space formed therein and a tongue portion disposed in the receiving space of the housing, two lateral sides of the housing are respectively disposed with a fixing portion; a plurality of transmission terminals, and each of the transmission terminals is disposed on the tongue portion; a power terminal disposed at a lateral side of the housing and attached to the fixing portion; a ground terminal disposed at the other lateral side of the housing and attached to the other fixing portion; a SATA docking connector; a power conducting part disposed on an internal side of the SATA docking connector corresponding to a position of the power terminal; a ground conducting part disposed on an internal side of the SATA docking connector corresponding to a position of the ground terminal.

According to an embodiment of the present invention, the power terminal is defined as having a power connecting section, a power welding section extending from an end of the power connecting section, and a power contact section extending from another end of the power connecting section.

According to an embodiment of the present invention, the ground terminal is defined as having a ground connecting section, a ground welding section extending from an end of the ground connecting section, and a ground contact section extending from another end of the ground connecting section.

According to an embodiment of the present invention, the reading device is used to connect an external storage.

According to an embodiment of the present invention, the external storage can be U.2, M.2, NGFF, NvMe, SATA express, SATA, mSATA, Cfast, CF, SD, Micro SD, Memory stick, a HD and a SSD.

It is a secondary object of the present invention to integrate a signal terminal and a power terminal into one SATA connector, so as to reduce product size and lower overall production costs and selling prices, thereby increasing product competitiveness.

Embodiments of the present invention are provided as follows in order to describe characteristics and advantages of the present invention in details, which helps anyone skilled in the art understand and implement the technical contents of the present invention. By following the contents, claims and figures as disclosed in this description, anyone skilled in the art can easily understand the purpose and the advantages of the present invention.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 a is a three-dimensional schematic view showing a preferred embodiment of the present invention.
FIG. 1b is a three-dimensional schematic view showing a preferred embodiment of the present invention from another perspective.
FIG. 2 is a schematic view showing a terminal as defined in the present invention.
FIG. 3 is a two-dimensional schematic view showing a preferred embodiment of the present invention.
FIG. 4 is a schematic view showing a preferred embodiment of the present invention in use.

### DETAILED DESCRIPTION OF THE PREFERRED EMBODIMENTS

Implementations of the present invention are described by using the following embodiments, so that a person skilled in the art can easily understand other advantages and effects of the present invention by following the contents disclosed in the description of the embodiments.

The structures, proportions and sizes illustrated in the figures of the description are only meant to demonstrate the contents disclosed in the description, so as to assist a person skilled in the art in understanding and reading; they are not intended to limit the implementations of the invention and are not technically meaningful. Any modifications to the structures, proportions and sizes should achieve the effects and purposes intended by the invention without departing from the scope of the invention as disclosed herein. Further, words like "one", "two" and "on" used in the description are only intended to make the description clearer in meaning, and are not meant to limit the implementable scope of the invention; any relative changes or modifications thereof should be regarded as the implementable scope of the invention without actually changing the technical contents.

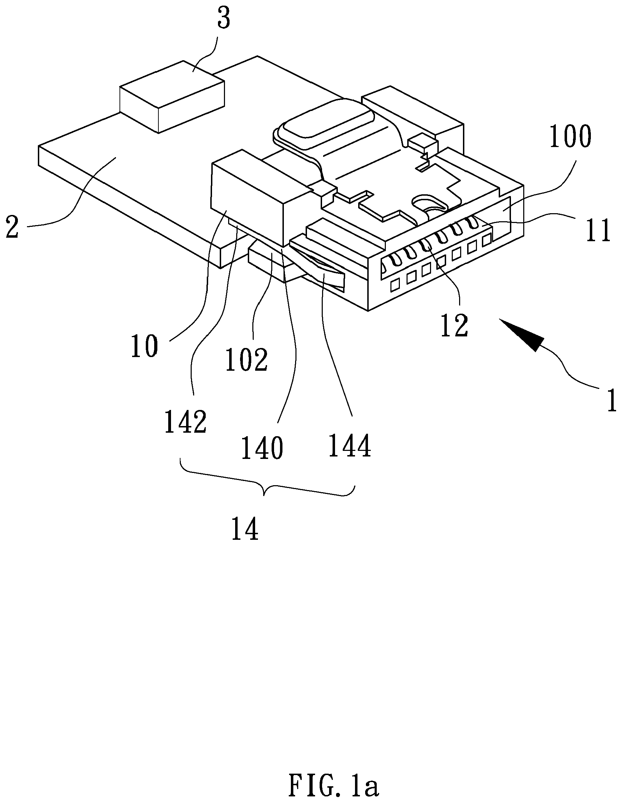

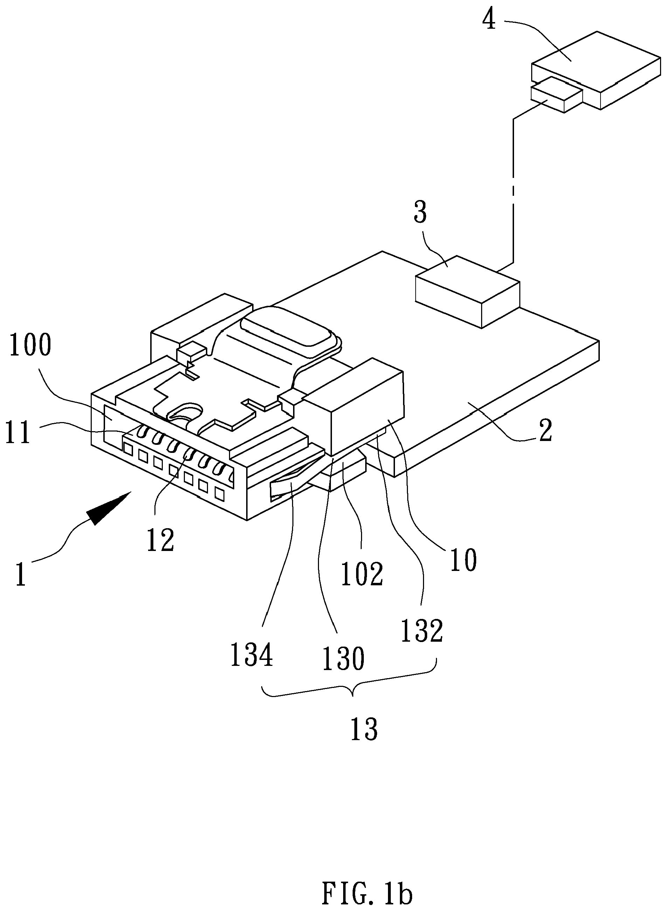

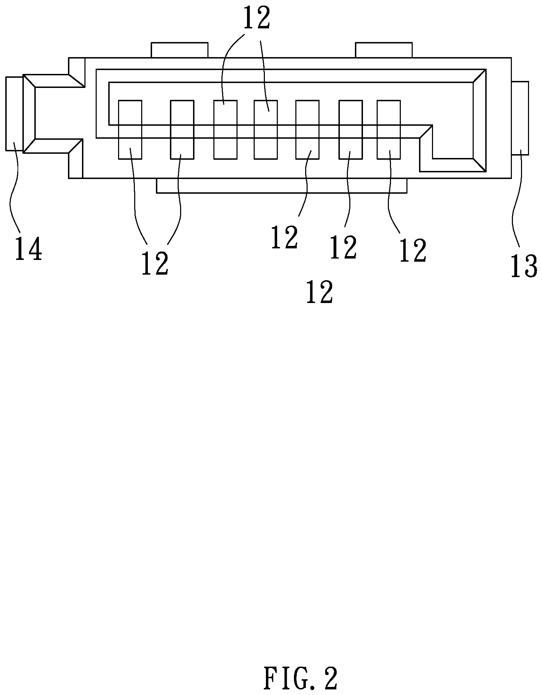

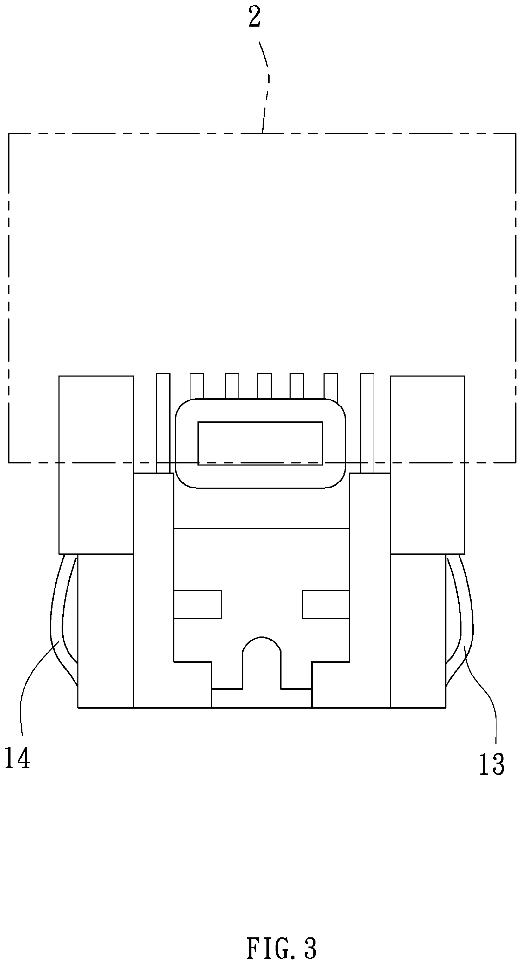

Referring to FIGS. 1a, 1b, 2 and 3, which are the three-dimensional schematic view and the three-dimensional schematic view from another perspective that show a preferred embodiment of the present invention, as well as the schematic view and the two-dimensional schematic view that show a terminal as defined in the invention. The present invention provides a SATA converter, which has a SATA connector 1 comprising a housing 10, a tongue portion 11, a transmission terminal 12, a power terminal 13 and a ground terminal 14; the housing 10 has a receiving space 100 formed therein, and the tongue portion 11 disposed in the housing 10 is inside of the receiving space 100; a fixing portion 102 is respectively disposed at two lateral sides of the housing 10; a plurality of transmission terminals 12 are disposed on the tongue portion 11, and there are a total of seven transmission terminals 12 present, with the seven transmission terminals 12 satisfying the definition of the pinout standard of a SATA connector. By definition, the seven transmission terminals 12 are sequentially ground, transmit positive, transmit negative, ground, receive negative, receive positive and ground. The fixing portions 102 are used to secure the power terminal 13 and the ground terminal 14 at two lateral sides of the housing 10.

Wherein the power terminal 13 is defined as having a power connecting section 130, a power welding section 132 extending from an end of the power connecting section 130, and a power contact section 134 extending from another end of the power connecting section 130. And the ground terminal 14 is defined as having a ground connecting section 140, a ground welding section 142 extending from an end of the ground connecting section 140, and a ground contact section 144 extending from another end of the ground connecting section 140. The SATA connector 1 of the present invention is mainly installed to a circuit board 2 and electrically connected to each of the transmission terminals 12, the power terminal 13 and the ground terminal 14 of the SATA connector 1; the circuit board 2 is electrically connected to a reading device 3, and can be connected to an external storage 4 (which can be U.2, M.2, NGFF, NvMe, SATA express, SATA, mSATA, Cfast, CF, SD, Micro SD, Memory stick, HD and SSD). The reading device 3 can be of a connecting standard that corresponds to the external storage 4. The SATA connector 1 and the reading device 3 are installed on the circuit board 2 to make up a SATA converter as a whole, so as to achieve the purpose of conversion and data expansion for corresponding external storage by supporting different types of reading devices. In addition, as the power terminal 13 is provided at a lateral side of the housing 10, the SATA connector is enabled to transmit electricity, such that the power required by a product is readily supplied without needing to connect additional power cords.

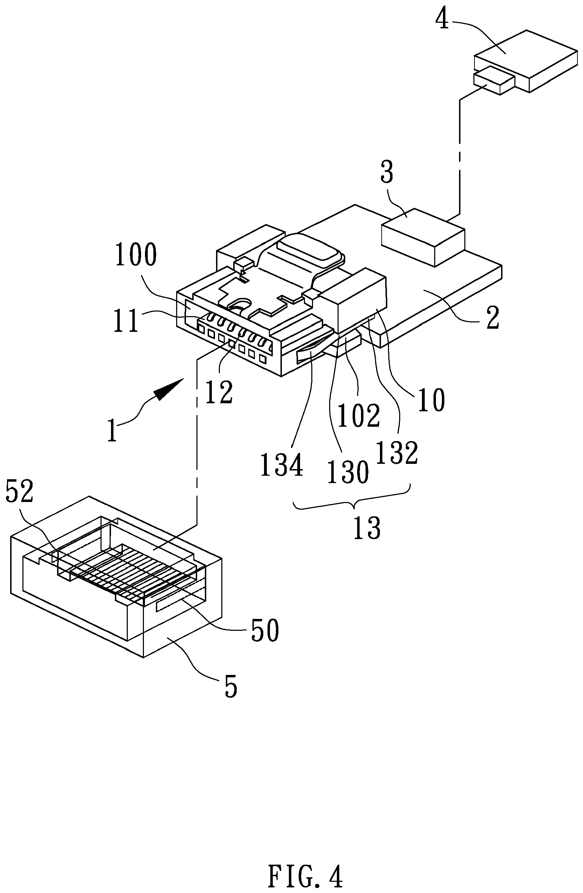

Referring to FIG. 4, which is a schematic view showing a preferred embodiment of the present invention in use. The SATA connector 1 of the present invention can be used to supply power of 5V and fabricated into a SATA converter, and the SATA connector 1 supports a transmission rate of 6.0 Gbps; the SATA connector 1 capable of transmitting electricity can be used in combination with the reading device 3 on the circuit board 2, and can be connected to an external storage 4 (which can be U.2, M.2, NGFF, NvMe, SATA express, SATA, mSATA, Cfast, CF, SD, Micro SD, Memory stick, HD and SSD) in order to achieve the purpose of conversion. From the SATA connector 1 of the present invention, it is clear to observe that the power terminal 13 and the ground terminal 14 of the SATA connector 1 have to be electrically connected to a power conducting part 50 and a ground conducting part 52 of a SATA docking connector 5; the power conducting part 50 and the ground conducting part 52 are respectively disposed on an internal side of the SATA docking connector 5, and on positions that correspond to the power terminal 13 and the ground terminal 14. The SATA connector 1 of the present invention can be installed on the circuit board 2, and the reading device 3 can be used to serve the purpose of conversion. During usage, as soon as the SATA docking connector 5 is inserted into the SATA connector 1, the power terminal 13 and the ground terminal 14 come into contact with the power conducting part 50 and the ground conducting part 52 and become conductive, and then electrical currents are transmitted from the power terminal 13 to the power conducting part 50, thereby achieving the purpose of supplying power. In addition, the reading device 3 installed on the circuit board 2 can connect to the external storage 4 (which can be U.2, M.2, NGFF, NvMe, SATA express, SATA, mSATA, Cfast, CF, SD, Micro SD, Memory stick, HD and SSD) and then access data via the reading device 3 in order to fulfill the purpose of conversion.

It is of course to be understood that the embodiments described herein is merely illustrative of the principles of the invention and are not to be used to limit the invention. A wide variety of modifications thereto may be effected by persons skilled in the art without departing from the spirit and scope of the invention as set forth in the following claims.

## Claims

1. A serial advanced technology attachment converter, comprising:
a circuit board 2 being electrically connected to at least a reading device 3;
a SATA (Serial Advanced Technology Attachment) connector 1 being electrically connected to the circuit board 2 and having a housing 10 with a receiving space 100 formed therein, a tongue portion 11 disposed inside of the receiving space 100 of the housing 10, and a fixing portion 102 respectively disposed at two lateral sides of the housing 10;
a plurality of transmission terminals 12, with each of the transmission terminals 12 being disposed on the tongue portion 11;
a power terminal 13 being disposed at a lateral side of the housing 10 and attached to the fixing portion 102; and
a ground terminal 14 being disposed at another lateral side of the housing 10 and attached to the other fixing portion 102.

2. The serial advanced technology attachment converter of claim 1, wherein the power terminal 13 is defined as having a power connecting section 130, a power welding section 132 extending from an end of the power connecting section 130, and a power contact section 134 extending from another end of the power connecting section 130.

3. The serial advanced technology attachment converter of claim 1, wherein the ground terminal 14 is defined as having a ground connecting section 140, a ground welding section 142 extending from an end of the ground connecting section 140, and a ground contact section 144 extending from another end of the ground connecting section 140.

4. The serial advanced technology attachment converter of claim 1, wherein the reading device 3 is used to connect an external storage 4.

5. The serial advanced technology attachment converter of claim 4, wherein the external storage 4 can be U.2, M.2, NGFF (Next Generation Form Factor), NvMe (Non-Volatile Memory Express), SATA (Serial Advanced Technology Attachment) express, SATA, mSATA (Mini Serial Advanced Technology Attachment), Cfast, CF (Compact Flash Card), SD (Secure Digital Memory Card), Micro SD (Micro Secure Digital Memory Card), Memory stick, HD (Hard Disk) and SSD (Solid State Disk).

6. A serial advanced technology attachment converter, comprising:
a circuit board 2 being electrically connected to at least a reading device 3;
a SATA connector 1 being electrically connected to the circuit board 2 and having a housing 10 with a receiving space 100 formed therein, a tongue portion 11 disposed inside of the receiving space 100 of the housing 10, and a fixing portion 102 respectively disposed at two lateral sides of the housing 10;
a plurality of transmission terminals 12, with each of the transmission terminals 12 being disposed on the tongue portion 11;
a power terminal 13 being disposed at a lateral side of the housing 10 and attached to the fixing portion 102;
a ground terminal 14 being disposed at another lateral side of the housing 10 and attached to the other fixing portion 102;
a SATA docking connector 5;
a power conducting part 50 being disposed on an internal side of the SATA docking connector 5 corresponding to a position of the power terminal 13; and
a ground conducting part 52 being disposed on an internal side of the SATA docking connector 5 corresponding to a position of the ground terminal 14.

7. The serial advanced technology attachment converter of claim 6, wherein the power terminal 13 is defined as having a power connecting section 130, a power welding section 132 extending from an end of the power connecting section 130, and a power contact section 134 extending from another end of the power connecting section 130.

8. The serial advanced technology attachment converter of claim 6, wherein the ground terminal 14 is defined as having a ground connecting section 140, a ground welding section 142 extending from an end of the ground connecting section 140, and a ground contact section 144 extending from another end of the ground connecting section 140.

9. The serial advanced technology attachment converter of claim 6, wherein the reading device 3 is used to connect an external storage 4.

10. The serial advanced technology attachment converter of claim 9, wherein the external storage 4 can be U.2, M.2, NGFF (Next Generation Form Factor), NvMe (Non-Volatile Memory Express), SATA (Serial Advanced Technology Attachment) express, SATA, mSATA (Mini Serial Advanced Technology Attachment), Cfast, CF (Compact Flash Card), SD (Secure Digital Memory Card), Micro SD (Micro Secure Digital Memory Card), Memory stick, HD (Hard Disk) and SSD (Solid State Disk).
